(19) Europäisches Patentamt
European Patent Office
Office européen des brevets

(11) **EP 4 088 575 A1**

(12) **EUROPÄISCHE PATENTANMELDUNG**

(43) Veröffentlichungstag:
**16.11.2022   Patentblatt 2022/46**

(21) Anmeldenummer: **21020257.8**

(22) Anmeldetag: **14.05.2021**

(51) Internationale Patentklassifikation (IPC):
**A01N 37/50** (2006.01)     **A01N 43/40** (2006.01)
**A01P 3/00** (2006.01)

(52) Gemeinsame Patentklassifikation (CPC):
**A01N 37/50; A01N 43/40**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Sauter, Hubert**
**72270 Baiersbronn (DE)**

(72) Erfinder: **Sauter, Hubert**
**72270 Baiersbronn (DE)**

(74) Vertreter: **Jungblut & Seuss**
**Patentanwälte**
**Wittestraße 30J**
**13509 Berlin (DE)**

(54) **VERFAHREN ZUR GLEICHZEITIGEN OPTIMIERUNG VON ÖKOLOGIE, ÖKONOMIE UND WIRKUNG BEI DER ANWENDUNG VON EPISYSTEMISCHEN STROBILURINFUNGIZIDEN**

(57)     Es wird ein einfaches und praktikables Verfahren beschrieben, das dem landwirtschaftlichen Anwender erhebliche Vorteile im Hinblick auf Wirkungsgrad, Ökonomie und Ökologie bei Fungizidbehandlungen mit episystemischen Strobilurinen, z.B. mit Kresoxim-methyl, Trifloxystrobin, Picoxystrobin, Triclopyricarb, Flufenoxistrobin oder Bifujunzhi bietet. Prinzip und Verfahren beruhen im Kern auf einer schlichten Vorverlegung der Behandlung vor bisher übliche, gewohnte und empfohlene Anwendungszeitpunkte. Hierdurch können kontraintuitiv überraschende Wirkungssteigerungen unter gleichzeitiger, ökonomisch und insbesondere ökologisch erwünschter Einsparung von Wirkstoff-Aufwandmengen bei gleichzeitigem Erhalt oder sogar Verbesserung des Wirkungsgrades erzielt werden.

EP 4 088 575 A1

**Beschreibung**

Die große Wirkstoffklasse der Strobilurin-Fungizide hat in der landwirtschaftlichen Praxis verbreitet Anwendung gefunden und herausragende Bedeutung erlangt. Neben zahlreichen Patentschriften und Fortschrittsberichten aus Forschung, Entwicklung und aus der landwirtschaftlichen Praxisanwendung gibt es auch eine Reihe von Übersichtsartikeln zur Stoffklasse der Strobilurine generell, siehe z.B. [1]-[5] und dort zitierte Literatur.

Die Stoffklasse der Strobilurine ist sehr umfangreich. Sie enthält zahlreiche wirksame, chemische Individuen (Einzelverbindungen), von denen einige für die Praxis als Agrarfungizide entwickelt und dabei sorgfältig hinsichtlich Wirkungen, Nebenwirkungen und Umweltverträglichkeit untersucht, in aufwändigen Zulassungsverfahren behördlich überprüft und schließlich für die praktische Anwendung durch den Farmer unter bestimmten Vorgaben von den Zulassungsbehörden für die praktische Anwendung freigegeben wurden und von den Herstellern bzw. Vertreibern dem Markt und damit dem Landwirt als Kunden zur Verfügung gestellt werden.

Die ganze Stoffklasse der Strobilurine lässt sich durch eine allgemeine, "generische chemische Strukturformel", d.h. durch einen auf alle Strobilurine zutreffenden, chemischen Strukturtypus charakterisieren. Eine solche allgemeine Struktur wird beispielsweise durch die Formel I in der Patentanmeldung WO 2013092224 A1 [6] für die Strobilurine dargestellt. Außerdem findet man Beispiele für die variierenden chemischen Substrukturen der verschiedenen Untertypen (z.B. Enolether, Crotonester, Oximether, Oximamide, Methoxycarbamate, Triazolinone usw.) ausführlich erläutert in den Übersichtsartikeln, z.B. [4, 5].

Zum anderen ist auf der Seite der praktischen Wirkung als Fungizide mit der ganzen Stoffklasse essentiell ein molekular-biochemischer Wirkmechanismus verbunden, nämlich die Hemmung der mitochondrialen Atmung auf Ebene des bc1-Komplexes, siehe z.B. [1]-[5].

Damit zusammenhängend ist experimentell belegt, dass Strobilurine das Stadium der Sporenkeimung von Pilzen vor einer potentiellen Infektion generell um Größenordnungen effizienter hemmen als das spätere Mycelwachstum nach Infektion. Dies ist ein besonderes Merkmal der ganzen Stoffklasse der Strobilurine und mit entscheidend für die gute protektive Wirkung. Im Prinzip kann durch diese Sporenkeimungshemmung bereits der Beginn einer Ansiedelung und Ausbreitung des Pilzes auf der Blattoberfläche weitgehend unterdrückt, buchstäblich "im Keim erstickt" werden. Eine spätere Infektion der Blätter kann im Normalfall deswegen gar nicht mehr erfolgen. Der Pilz ist dann sozusagen als Keimungs-, Ausbreitungs- und Vermehrungs-unfähige Spore lahmgelegt und unschädlich gemacht.

**Relevanter Stand der Technik**

Bereits bekannt und in der landwirtschaftlichen Praxis weit verbreitet ist nun, Pflanzenbestände durch Besprühen der Blätter mit Strobilurinen zu behandeln und damit vor Pilzbefall zu schützen.

In der vorliegenden Anmeldung geht es nur um die Blattbehandlung.

Wie bereits erwähnt, hemmen die Strobilurine besonders stark das Stadium der pilzlichen Sporenkeimung. Die Blattbehandlung mit Strobilurinen erfolgt deshalb in der Regel und vorzugsweise protektiv, d.h. kurz vor oder nahe bei dem erwarteten Beginn des Eintreffens und der Auskeimung infektiöser Schadpilz-Sporen auf den Blattoberflächen, gleichgültig, ob die Fungizide nach ihrem Transport- und Verteilungsmodus als systemisch oder episystemisch oder anderweitig klassifiziert werden.

Demgegenüber erweist sich in der Praxis eine spätere, kurative (d.h. nach Infektion heilende) Wirkung mit den gleichen Wirkstoffen nach bereits erfolgter Infektion durchweg als deutlich weniger effizient. Deswegen wird empfohlen, Blattbehandlungen mit Strobilurinen protektiv, d.h. vorbeugend vor der erwarteten Infektion vorzunehmen [1-5].

Im Rahmen der üblichen, protektiven Fungizidbehandlungen gelten schon seit eh und je gewisse Konventionen für die Anwendung, z.B. mit den altbekannten konventionellen Kontaktfungiziden wie z.B. etwa Kupfer, Schwefel oder Dithiocarbamate. Daraus resultiert beim Anwender in der Routine die zur Regel gewordene Gewohnheit, protektive Fungizide zwar hinreichend früh, jedoch nicht zu früh auszubringen. Eine "zu frühe" Ausbringung, so wird intuitiv befürchtet, würde nämlich einer erwünscht langdauernden, ausreichenden Wirksamkeit wegen zwischenzeitlichen Abwaschens und Abbau der Wirkstoffe entgegen wirken.

Derartige berechtigte Überlegungen und Erfahrungen können allerdings andererseits auch zu unberechtigten Vorurteilen gegen *jegliche* Art von besonders frühen Behandlungszeitpunkten bei *jeglicher* Art von Fungiziden führen. Hier gilt es also gegebenenfalls, **Vorurteile** gegen eine besonders frühe Anwendung und gegebenenfalls auch gegen reduzierte Aufwandmengen zu überwinden. Dies trifft speziell für die nachstehend beschriebenen *episystemischen* Strobilurine zu.

Die Behandlungszeitpunkte für die erwähnten konventionell-protektiven Behandlungen können dabei in der landwirtschaftlichen Praxis je nach Kulturpflanzen-spezifischen Gegebenheiten sowie auch je nach regionalen und klimatischen Voraussetzungen und Umständen variieren. Die Behandlungszeitpunkte und Aufwandmengen können außerdem je nach dem individuellen Strobilurin insofern variieren, als vom Hersteller bzw. Vertreiber der Wirkstoffzubereitungen wie auch von amtlichen Pflanzenschutzdiensten bestimmte Empfehlungen für die Anwendung vorgeschlagen werden, z.B. aufgrund praktischer Erfahrungen im Zuge der Entwicklung des Fungizids zur Marktreife und/oder wegen gesetzlicher Regulierungen im Hinblick auf Umwelt-, Anwender und Verbraucherschutz oder auch zur Vermeidung von Resistenzentwicklungen. Als üblicher erster Behandlungszeitpunkt (auch im Falle von Mehrfachbehandlungen) für protektive Fungizidbehandlungen wird in der Regel ein Zeitpunkt gewählt, an dem in der konkreten Situation aufgrund von Prognosen oder von Erfahrungswissen Sporenanflug zu erwarten ist - nicht früher.

Es ist weiterhin bekannt, dass es eine bestimmte Untergruppe von Strobilurinen gibt, die sich durch spezielle Transport- und Verteilungseigenschaften auf der Pflanzenoberfläche auszeichnen: **Die episystemischen Strobilurine.**

"Episystemisch" bedeutet in diesem Zusammenhang, dass ein Wirkstoff die Fähigkeit hat, sich nach der Applikation auf (griech. "epi") der Blattoberfläche im Sinne eines Gaschromatographie-artigen Verteilungsmechanismus' von seinem ursprünglichen Ort des Auftreffens auf der Blattoberfläche wegzubewegen und sich über die Oberfläche des Systems, nämlich auf der Pflanze auszubreiten und zu verteilen. [4, 5,7].

*"Systemisch"* in einem ganz allgemeinen, generelleren Sinne bedeutet bei Fungiziden, dass der Wirkstoff (genauer: seine Wirkstoffmoleküle) nicht nur lokal dort verbleibt, wo er auf die Pflanze auftrifft, sondern dass er mittels bestimmter, physicochemisch-biophysikalisch erklärbarer Transportmechanismen in moleculardisperser Form in der Lage ist und die Fähigkeit hat, nicht nur am Ort seines primären Auftreffens zu verweilen und dort lokal zu wirken, sondern in die Pflanze einzudringen und sich dort innerlich zu verbreiten und/oder sich auf der Oberfläche des jeweiligen "Systems Pflanze" auszubreiten.

Dies bedeutet normalerweise für *"klassisch-systemische Fungizide"* die Fähigkeit des Wirkstoffs, über die Blätter **in** die Pflanze und ihre inneren akropetalen oder gelegentlich auch basipetalen Transportwege zwischen Wurzeln und Blättern/Früchten/Erntegut einzudringen und die dort jeweils vorhandenen Transportwege und Transportmechanismen zu nutzen. *Translaminar-systemisch* bedeutet demgegenüber nur, dass der Wirkstoff (über gewisse Verteilungsmechanismen) in ein Blatt eindringen kann, im Inneren des Blattes verbleibt oder dann quer von unten nach oben oder umgekehrt von oben nach unten die Gegenseite erreichen und dort ggf. auch teilweise wieder austreten kann.

Erfindungsgemäß geht es hier ausschließlich um eine dritte Untervariante des systemischen Transports, nämlich den *episystemischen Transport- und Verteilungsmodus,* wie er sich im Untertypus der episystemischen Strobilurine manifestiert.

Dieser Untertypus episystemischer Fungizide, speziell der der episystemischen Strobilurine ist nicht durch eine generische chemische Strukturformel charakterisiert, sondern wird - unabhängig vom chemischen Strukturtypus - generell und exklusiv durch eine physikalische Stoffeigenschaft, nämlich den Dampfdruck des Wirkstoffs definiert. Erfindungsgemäß gilt: Für die fungizide Praxisanwendung brauchbare episystemische Transport- und Verteilungseigenschaften sind an einen Dampfdruckbereich innerhalb enger Grenzen gekoppelt: Dieser **Dampfdruckbereich** liegt erfahrungsgemäß zwischen $0.5 \times 10^{-7}$ und $5 \times 10^{-6}$ Pascal, bevorzugt zwischen $10^{-7}$ und $10^{-6}$ Pascal (bei 20°C) [5].

Innerhalb dieses Dampfdruckbereiches liegen nach einer halbquantitativen Struktur-Eigenschafts-Betrachtung auch die publizierten chinesischen Strobilurine Triclopyricarb, Flufenoxystrobin, Bifujunzhi, und Benzothiostrobin (letzteres am oberen Dampfdruck-Rand). Demgemäß fallen auch sie (und ggf. weitere) unter die erfindungsgemäße Definition als episystemische Strobilurine.

Mit diesem Dampfdruckbereich sind die episystemischen Transport- und Verteilungseigenschaften der Wirkstoffe kausal verbunden und definiert. Außerhalb dieser Bereichsgrenzen findet keine für die landwirtschaftliche Praxis brauchbare episystemische Verteilung statt.

Vorteilhaft für episystemischen Transport und Verteilungseigenschaften ist außerdem ein hoher Verteilungskoeffizient Octanol/Wasser (log Pow > ca. 2.0, bevorzugt > ca. 3.0), um eine ausreichende Verteilung und Präsenz in den Kutikula-Wachsschichten der Blätter zu gewährleisten. Demgegenüber sind klassisch-systemische Transportphänomene bekanntermaßen eher bei niedrigeren Verteilungskoeffizienten anzutreffen (log Pow< ca. 3.0). Systemische Wirkstoffe, die in die Pflanze eindringen und dort verweilen, benötigen auch eine hinreichende metabolische Stabilität. Dies ist bei episystemischen Wirkstoffen weniger kritisch, da in ihrem bevorzugten Aufenthaltsraum, der Kutikula und den extrem dünnen Gasphasen darüber, den sogenannten "boundary layers" nahezu kein metabolischer Abbau stattfindet [5, 7]. Dies führt im Ergebnis auch zu einer ausgeprägt lang anhaltenden Wirkungsdauer und damit auch über längere Zeiträume zu hoher Wirkungssicherheit.

Aufgrund der vorstehend genannten Eigenschaften von Dampfdruck und Verteilungskoeffizient sind die Fungizide Trifloxystrobin, Picoxystrobin, Triclopyricarb, Flufenoxistrobin, Bifujunzhi und Kresoxim-methyl bevorzugte Fungizide mit denen die Präprotektion besonders vorteilhaft auszuführen ist. Diese können erforderlichenfalls auch gemischt verwendet werden. Das aufgrund seiner Eigenschaften am meisten bevorzugte episystemische Strobilurin ist Trifloxystrobin.

Die erfindungsgemäßen episystemischen Wirkstoffmoleküle bleiben nicht nur lokal an der Auftreff-Stelle liegen sondern verteilen sich moleculardispers langsam zeitabhängig in alle Richtungen auf der Blattoberfläche, so dass schließlich ein mehr oder weniger gleichmäßiger Schutzfilm die gesamte Blattoberfläche mit dem Fungizid überzieht und vor Pilzbefall schützt. Durch diese "Imprägnierung" der Blattoberfläche kann so die Infektion der Blätter durch die starke Sporenkeimungshemmung von Anfang an weitgehend verhindert werden. Eine spätere Pilzinfektion kann so buchstäblich bereits "im Keim erstickt" werden (Sporenkeimungs-hemmung). Dadurch erübrigt sich im Idealfall eine nachfolgende Hemmung des Mycelwachstums in oder auf der Pflanze nach einer nun gar nicht mehr möglichen Infektion.

Das Prinzip der episystemischen Wirkstoffverteilung wird z.B. eingehend in einem Übersichtsartikel von 2007 [5] im Abschnitt "Leaf Surface Distribution via Vapor Phase: Episystemicity" (S. 475; vgl 3. Aufl. 2019, S. 674-675) beschrieben.

Dort [5] heißt es hierzu unter anderem:

*"In the case of protective treatment, if the substance is applied early enough, then episystemic transportation can lead to a more or less uniform distribution in the waxy leaf surface, thereby forming a protective shield against airborne fungal spores, by continuously releasing the active ingredient."*

Hier [5] wird also ein konventionell üblicher, frühzeitiger, protektiver Anwendungszeitpunkt vorgeschlagen bzw. benannt, um eine hinreichend zufriedenstellende protektive Wirkung bei gegebener Aufwandmenge zu ermöglichen.

Es hat sich allerdings gezeigt, dass die bisher üblichen Blattbehandlungen mit episystemischen Strobilurinen nicht immer zu optimalen Bekämpfungserfolgen führen.

In [5] wird nichts gesagt über die Möglichkeit, durch weitergehende, unkonventionell frühzeitige und optimale Vorverlegung des Anwendungszeitpunktes den Wirkungsgrad, die Wirkungssicherheit und die Wirkungsdauer zu erhöhen. Gar nichts wird gesagt über die Möglichkeit, durch Vorverlegung des Behandlungszeitpunktes die Aufwandmenge zu reduzieren und damit dennoch unter Erhalt oder sogar Steigerung von Wirkungsgrad und Wirkungssicherheit Wirkstoff einzusparen und/oder durch Vorverlegung des Anwendungszeitpunktes bei gleicher Aufwandmenge die Wirkung zu erhöhen oder durch optimale Vorverlegung des Anwendungszeitpunktes beide Effekte gleichzeitig zu erreichen, d.h. Wirkungssteigerung bei reduzierter Aufwandmenge durch schlichte Vorverlegung des Anwendungszeitpunktes.

Mit anderen Worten:

In diesem Stand der Technik [5] ist zwar von *"hinreichend früh"* die Rede, also von einem Zeitpunkt, an dem Sporenanflug zu erwarten ist, jedoch nicht von möglichst und optimal frühzeitigen Anwendungszeitpunkten und von den hierdurch erzielbaren ökonomischen Vorteilen durch erhöhten Wirkungsgrad und größere Wirkungssicherheit sowie ebenso wenig von den weiteren ökonomischen und gleichzeitig auch ökologischen Vorteilen durch die mögliche Wirkstoffeinsparung.

Es ist dort [5] auch die Rede von einer "mehr oder weniger gleichmäßigen Verteilung" ("more or less uniform distribution") in den Wachsschichten der Blattoberfläche, die zur Ausbildung einer Art Schutzschild führt. Es fehlt dort jedoch jeglicher Hinweis, dass eine "more or less uniform distribution" *nicht* immer für eine optimale Wirkung genügt sondern dass hierfür eine *möglichst vollständig gleichmäßige* Verteilung nötig ist, die überall, in jedem kleinsten Mikroareal der Blattoberfläche eine zur vollständigen Sporenkeimungshemmung ausreichende Wirkstoffanwesenheit gewährleistet. Insbesondere ist nicht erwähnt, dass eine solche möglichst vollständig gleichmäßige Verteilung durch weitestgehende Vorverlegung des Anwendungszeitpunktes erzielt werden kann.

In den üblichen Empfehlungen zur praktischen Anwendung bleibt es dem Belieben des Anwenders weitgehend überlassen, den Behandlungszeitpunkt so zu wählen, dass unter einer empfohlenen Aufwandmenge ein zufriedenstellender Effekt erzielt wird.

Dies ist von Pflanzenart zu Pflanzenart verschieden; es werden z.B. gewisse Zeiträume für die Behandlung empfohlen, die sich meist an den Pflanzenwachstumsstadien der zu behandelnden Kultur orientieren - z.B. gemäß BBA-Schema [8].

Alles fokussiert sich üblicherweise auf eine ausreichende *Wirkung* bei vorgegebener *Aufwandmenge;* der Anwendungszeitpunkt spielt zwar eine Rolle, aber nur eine nebensächliche ("*early enough*"). Von Wirkstoffeinsparung ist dort überhaupt nicht die Rede.

Erfindungsgemäß ist dies anders, indem der **Behandlungs- bzw. Anwendungszeitpunkt** in den Mittelpunkt der Betrachtung gerückt wird und sich bei Vorverlegung der Behandlung eine Wirkungssteigerung bei gleicher Aufwandmenge oder überraschend sogar eine Verminderung der Aufwandmenge bei vergleichbarem Wirkungsgrad ermöglicht wird oder besonders überraschend eine Kombination beider Effekte.

Gegenstand der Erfindung ist daher ein Verfahren zur prä-protektiven Blattbehandlung von Pflanzen mit Fungiziden, die gleichzeitig episystemische Transport- und Verteilungseigenschaften und sehr hohe Hemmung der pilzlichen Sporenkeimung aufweisen, dadurch gekennzeichnet, dass man den Behandlungszeitpunkt vor den Standard-Anwendungszeitpunkt (t(0)), an dem in der konkreten Situation aufgrund von Prognosen Sporenanflug zu erwarten ist, vorverlegt und gleichzeitig die Aufwandmenge demgegenüber vermindert.

Gegenstand der Erfindung ist ferner ein Verfahren zur Ermittlung des optimalen, vorverlegten Zeit-Bereiches für die prä-protektive Behandlung und für die dazu passenden verminderten Aufwandmenge dadurch gekennzeichnet, dass man in an sich bekannter Weise empirisch die Aufwandmenge R(0) ermittelt, bei der am Standard-Anwendungszeitpunkt (t(0)) bei den jeweiligen Kulturpflanzen ein Wirkungsgrad WG von 90-98% erzielt wird und anschließend systematisch die nötige Aufwandmenge R bei Behandlung vor Standard-Anwendungszeitpunkt (t(0)) bestimmt, bei der ein Wirkungsgrad WG von ca. 100% (d.h. mehr als 98%) erzielt wird.

Es sei bereits an dieser Stelle dem Einwand entgegengetreten, durch eine Verminderung der Aufwandmenge wachse die Gefahr der Resistenzbildung. Resistenzbildung hat jedoch nicht direkt mit der Aufwandmenge zu tun sondern mit Selektion resistenter(er) Spezies innerhalb der bekämpften Pilzpopulation bei nicht ausreichendem Wirkungsgrad. Entscheidend ist der Wirkungsgrad, und dessen Optimierung wird durch das erfindungsgemäße Verfahren gerade gezielt angestrebt.

Diese kontraintuitiven und überraschenden Folgerungen hieraus erklären sich im Gedankenexperiment bei tiefer gehender Betrachtung folgendermaßen:

Um die flächendeckende Ausbildung des Schutzfilms optimal zu erreichen, muss gewährleistet sein, dass schon vor Eintreffen der ersten Pilzsporen überall, in jedem kleinsten Mikro- bzw. Nanoareal der Blattoberfläche wegen der mikroskopischen Kleinheit der Sporen (laut Literatur in der Größenordnung von Mikrometern) eine zur vollständigen Keimungshemmung ausreichende Menge an Wirkstoff bereits vorhanden sein muss.

Am sichersten ist das der Fall, wenn man der episystemischen Migration und Verteilung des Wirkstoffs möglichst viel Zeit lässt. Das heißt, man wählt den Ausbringungszeitpunkt möglichst früh, eben gewissermaßen prä-protektiv im Sinne einer besonders frühzeitigen Präexpositions-prophylaxe und nicht erst später, klassisch protektiv, üblicherweise kurz vor dem erwarteten Anflug der Pilzsporen. Je länger die Wirkstoffapplikation zurückliegt, umso gleichmäßiger ist die Verteilung des Wirkstoffs überall auf der Blattoberfläche und desto sicherer seine überall *lückenlos* in jedem kleinsten Mikro- bzw Nano-Areal der Blattoberfläche zur *vollständigen* Sporenkeimungshemmung *sicher* ausreichende Wirkstoffkonzentration. Auf diese Weise wird insgesamt eine maximal mögliche fungizide Wirkung erzielt. Es nützt nichts, wenn zwar *im Durchschnitt* auf einem Blatt genügend Wirkstoffmenge zur Sporenkeimungshemmung vorhanden ist, eine Spore jedoch auf einem unterdosierten Mikroareal auftrifft und von dort als "Hotspot" ein Infektionsgeschehen auslöst.

In der Tat wurden überraschend positive Effekte in Bezug auf Wirkungsgrad und Wirkstoffeinsparung nach weitgehender Vorverlegung der Behandlungszeitpunkte mit episystemischen Strobilurinen vereinzelt nach Behandlung in Freilandbeständen verschiedener Kulturpflanzen bereits beobachtet [z.B. in Versuchen gegen Apfelschorf (Venturia inaequalis), Kartoffelfäule (Phytophthora infestans ) und Rebenbotrytis (Botrytis cinerea)]. Die initialen Ergebnisse sind beeindruckend: es konnten **bis zu 50% Wirkstoffeinsparung bei gleichzeitig verbessertem Wirkungsgrad erzielt werden.**

Die künftige Aufgabe besteht lediglich darin, das vorgestellte, erfindungsgemäße Prinzip und Verfahren der Vorverlegung der Fungizidbehandlung mit episystemischen Strobilurinen auf einen optimal frühzeitigen Anwendungszeitpunkt konkret für bestimmte Pflanzenkulturen und Umweltbedingungen zu beschreiben und für die jeweiligen Gegebenheiten zu definieren, d.h. mit Praxis-orientierten Versuchen zu untermauern und auszuarbeiten.

Gegebenenfalls kann auf diese Weise auch das Spektrum der Indikationen, also die Anzahl behandelbaren Pilzkrankheiten über den bisherigen Anwendungsbereich für bestimmte, bereits in die Praxis eingeführte episystemische Strobilurine erweitert werden.

Zu den Aufgaben im Hinblick auf die Anwendung der Erfindung für den konkreten Einzelfall gehören Verfahren und experimentelle Vorgehensweisen zur Ermittlung der *im konkreten Einzelfall* optimalen Anwendungszeitpunkte für die zeitlich vorverlegte Behandlung mit episystemischen Strobilurinen und daraus resultierende Anwendungsempfehlungen für den landwirtschaftlichen Anwender.

Unter "konkretem Einzelfall" ist hier die Anwendung bei bestimmten Kulturpflanzen gegen bestimmte zu erwartende Pilzinfektionen in bestimmten klimatischen und regionalen Zonen zu verstehen.

Die hierzu anzuwendenden biologischen Testverfahren sind *"an sich"* im Rahmen von Freiland (Outdoor-) Versuchen dem einschlägigen Fachmann als solche bekannt und geläufig. Die Freilandversuche können unter üblichen Feldbedingungen in Kleinparzellen oder Vegetationshallen oder in Töpfen unter geschützten Freilandbedingungen oder modellhaft auch unter Gewächshausbedingungen durchgeführt werden. Sie sind für den vorliegenden erfindungsgemäßen Fall speziell dadurch gekennzeichnet, dass man zur konkreten Ermittlung von optimal verminderter Aufwandmenge und möglichst frühzeitigem Anwendungszeitpunkt zum Beispiel folgendermaßen vorgeht:

Man gestaltet die Versuchspläne im Sinne eines zweidimensionalen Testschemas **(Testschema 1)** so, dass man zunächst die unbehandelte Kontrolle einplant (letzte Spalte), sodann die Zeile für die "Standard-Referenzbehandlungen am Tag **X (t(0))**". Dem Versuchsglied "Standard-Referenzbehandlung am Tag **X (t(0))** mit der Aufwandmenge **R(0)"** (Zeile 2, Spalte 2) kommt als experimentellem Standard-Referenzmaßstab und als Vergleichsmaßstab für eine übliche, konventionelle, protektive Behandlung entscheidende Bedeutung zu. Zuerst legt man für dieses Versuchsglied einen üblichen, empfohlenen Zeitpunkt für eine protektive Behandlung fest (Tag **X (t(0))** sowie eine hierfür empfohlene, möglichst niedrige Aufwandmenge **R(0)** in g/ha. Zweckmäßigerweise sollte hierbei ein Wirkungsgrad von nicht ganz 100% (z.B. 90-98%) resultieren, damit die erwarteten positiven Effekte nach Vorverlegung des Behandlungs-zeitpunktes überhaupt erkannt werden können und nicht wegen "Überdosierung" im Rauschen untergehen. Variiert werden nun die Bedingungen für die einzelnen weiteren Versuchsglieder in den Zeilen hinsichtlich des Behandlungszeitpunktes und hinsichtlich der Aufwandmenge in den Spalten.

Die aus diesen Versuchen resultierenden Ergebnis-Daten (Wirkungsgrade **WG**) vergleicht man dann mit der jeweiligen, bisher üblichen, konventionellen, protektiven Behandlung als dagegen abzuhebendem Standard, nämlich dem jeweiligen Versuchsglied "Standard-Referenzbehandlung am Tag **X (t(0))** mit der Aufwandmenge **R (0)"**.

Erfindungsgemäß vorverlegte Behandlungszeitpunkte können dabei je nach zu behandelnder Kulturpflanze und Pilzkrankheit einige Tage vorverlegt sein oder bis zu einigen Wochen vor dem erwarteten Infektionszeitpunkt liegen. Erfindungsgemäß reduzierte Aufwandmengen zu den vorverlegten Behandlungszeitpunkten können beispielsweise zwischen 90% und 50 % der im Standard-Versuchsglied "Standard-Referenzbehandlung am Tag **X(t(0))** mit der Aufwandmenge **R(0)"** eingesetzten Aufwandmenge betragen.

Das folgende **Testschema 1** illustriert einen derartigen Versuchsplan, wobei die Zeilen für die Vorverlegung in Tagen stehen, die Spalten die reduzierten Aufwandmengen angeben und jedes der freien Kästchen für die Eintragung des jeweiligen Wirkungsgrades vorgesehen ist.

**Testschema 1**

| Zeitpunkt | Aufwandmenge | >>> | >>> | >>> | >>> | |
|---|---|---|---|---|---|---|
| ↓ ↓ ↓ | **R(0)** | 0.9 **R(0)** | 0.8 **R(0)** | 0.7 **R(0)** | 0.5 **R(0)** | 0.0 **R(0)** |
| **Standard-Referenzbehandlung am Tag X (t(0))** | **WG** 90% | | | **WG** 83% | | **WG** 0% |
| 3 Tage früher t(-3d) | | | | | | |
| 5 Tage früher t(-5d) | **WG** 98% | | | **WG** 94% | | **WG** 0% |
| 7 Tage früher t(-7d) | **WG** 100% | | | **WG** 100% | | **WG** 0% |
| 14 Tage früher t(-14d) | | | | | | |

Das skizzierte Beispiel ist fiktiv und dient nur der allgemeinen Illustration. Bei der Wahl der verschiedenen Behandlungszeiten und Aufwandmengen für die geplanten Versuchsglieder ist man frei und kann diese je nach den Gegebenheiten und Randbedingungen auch anders als in der Tabelle angegeben wählen. Auch die Anzahl der Versuchsglieder ist frei wählbar. Fest steht nur das Versuchsglied "Standard-Referenzbehandlung am Tag **X(t(0))** mit der Aufwandmenge **R(0)"** als Standard. Für einen ersten orientierenden Versuch genügt dann beispielsweise nur ein weiteres Versuchsglied. Im o.a. Testschema 1 resultiert in den entsprechenden Kästchen (fiktiv) 94% Wirkungsgrad für das 5 Tage früher mit der Aufwandmenge von nur 70% **R(0)** behandelte Versuchsglied bei 90% Wirkungsgrad in der "Standard-Referenzbehandlung am Tag **X(t(0))** mit der Aufwandmenge **R(0)"**. Verschiedene Beobachtungen haben gezeigt, dass für vorverlegte Behandlungen in aller Regel auch bei verminderter Aufwandmenge höhere Wirkungsgrade erzielt werden können als bei einer konventionell protektiven Behandlung.

Mit ähnlich konzipierten Versuchsanstellungen lassen sich auch aus Gewächshausversuchen modellhaft aussagekräftige Ergebnisse an verschiedenen Pflanzen und Pilzkrankheiten gewinnen.

**Anwendungsbeispiele**

In den nachstehenden Anwendungsbeispielen werden jeweils wässrige Zubereitungen der zu testenden Wirkstoffe in den je nach Versuchsglied vorgesehenen Applikationsraten - bezogen auf die Wirkstoffkonzentration - eingesetzt. Die Wirkstoffe werden hierzu beispielsweise als handelsübliche Formulierungen in Wasser bis zur gewünschten Applikationsrate gelöst bzw. emulgiert oder dispergiert.

Alternativ hierzu können die Wirkstoffe selbst zu 1 Gewichtsteil Wirkstoff mit 1 Gewichtsteil Alkylarylpolyglycolether als Emulgator in 49 Gewichtsteilen Aceton/Dimethylacetamid 1:1 oder auch in 49 Gewichtsteilen Dimethylformamid aufgelöst werden und dann mit Wasser bis auf die gewünschte Konzentration verdünnt werden.

Die vorteilhaften Auswirkungen einer Vorverlegung des Behandlungszeitpunktes auf den jeweils erzielten Wirkungsgrad **WG** bei der Anwendung episystemischer Strobilurinfungizide lassen sich beispielsweise durch die folgenden Versuchsanordnungen zeigen. Dies gilt für alle episystemischen Strobilurine in ähnlichem Maße.

Die Auswertung der Tests erfolgt durch visuelle Feststellung der befallenen Blattflächen in Prozent. Diese Prozentwerte werden in Wirkungsgrade **WG** umgerechnet.

Der Wirkungsgrad wird nach der Formel von Abbot wie folgt bestimmt:

$$\textbf{WG}\ [\%] = (1 - \alpha/\beta) \cdot 100\ \%$$

α entspricht dem Pilzbefall der behandelten Pflanzen in %, und β entspricht dem Pilzbefall der unbehandelten Kontrollpflanzen in %.

Bei einem Wirkungsgrad von 0 % entspricht der Befall der behandelten Pflanzen demjenigen der unbehandelten Kontrollpflanzen. Bei einem Wirkungsgrad von 100% weisen die behandelten Pflanzen keinen Befall auf.

Die Versuchsauswertungen zeigen im Falle gleichbleibender Applikationsrate bzw. Aufwandmenge die erwartete Verbesserung des Wirkungsgrades bei Vorverlegung des Anwendungszeitpunktes. Weiterhin wird dabei auch offenbar, dass die Vorverlegung des Anwendungszeitpunktes sogar bei gleichzeitig reduzierter Applikationsrate zu besseren Wirkungsgraden führen kann. Dies wird deutlich im Vergleich mit den Wirkungsgraden, die sich bei späterer Behandlung mit höheren Aufwandmengen ergeben

## Beispiel A

### Phytophthora-Test (Tomaten)

Junge Pflanzen werden mit einer Zubereitung des zu testenden episystemischen Strobilurins mit der jeweils angegebenen Anwendungsrate des jeweiligen Wirkstoffs besprüht.

Der Zeitpunkt dieser Behandlung ist der **Standard-Anwendungszeitpunkt t(0).** Anschließend lässt man die Sprühbeschichtung 3 Stunden lang antrocknen. Unmittelbar danach werden die Pflanzen mit einer wässrigen Sporensuspension von *Phytophthora infestans* geimpft. Dies ist der **Impfzeitpunkt.**

Die Pflanzen werden dann in einem Inkubationsschrank bei ca. 20°C und einer relativen Luftfeuchtigkeit von 100% platziert. Der Test wird 3 Tage nach der Impfung ausgewertet. Die zeitliche Abfolge nach der Impfung wird bei allen Tests beibehalten. Zeitlich variiert, d.h. vorverlegt wird bei den einzelnen Versuchsgliedern nur der Behandlungszeitpunkt in Relation zum Impfzeitpunkt.

### *Testschema und Vorgehensweise (gilt auch für die weiteren Beispiele B bis F):*

1. In einem *Vorversuch* wird zunächst anhand einer Verdünnungsreihe für das jeweilig zu testende episystemische Strobilurinfungizid eine **Standard-Anwendungsrate R(0)** [ppm.ai] des jeweiligen Wirkstoffs als Referenzgröße für eine wirksame Behandlung zum o.a. **Standard-Anwendungs-zeitpunkt t(0)** ermittelt.

Diese **Standard-Anwendungsrate R(0)** soll für die folgenden Hauptversuche zweckmäßigerweise so gewählt werden, dass zum Zeitpunkt der späteren Auswertung ein **Wirkungsgrad WG** von ca. 80 bis 90% erzielt wird. Hierdurch wird erreicht, dass die durch Vorverlegung des Anwendungszeitpunktes zu erwartenden höheren Wirkungsgrade (bis zu 100%) in den weiteren Versuchsgliedern überhaupt erkannt werden können und nicht wegen "Überdosierung" unerkannt bleiben.

Der **Impfzeitpunkt** ist für alle Versuchsglieder der gleiche; er liegt stets 3 Stunden nach dem **Standard-Anwendungszeitpunkt t(0).** Variiert werden können in den einzelnen Versuchsgliedern jedoch dem Versuchszweck entsprechend die vorverlegten Behandlungszeitpunkte (t(-nd)).

2. Im nachfolgenden Hauptversuch wird die so ermittelte **Standard-Anwendungsrate R(0)** bei einem ersten Satz von Versuchsgliedern zunächst stets beibehalten, ebenso auch der **Impfzeitpunkt** (definiert durch Datum und Uhrzeit). Variiert werden die Anwendungszeitpunkte, indem sie im Versuchsplan stufenweise und systematisch vorverlegt werden, z.B. wahlweise um 1,2,4 oder 8 oder noch mehr Tage vor den **Standard-Anwendungszeitpunkt t(0).** Anzahl und Auswahl der vorverlegten Anwendungszeitpunkte richtet sich nach den erwarteten, zeitabhängigen Wirkungseffekten. Hieraus resultiert ein Versuchsplan mit beispielsweise den folgenden Versuchsgliedern:

Versuchsglied 0: Unbehandelte Kontrolle, später zusammen mit allen übrigen Versuchsgliedern geimpft zum vorher festgelegten, für alle Versuchsglieder gültigen Impfzeitpunkt

Versuchsglied 1: Protektive Behandlung zum Standard-Anwendungszeitpunkt **t(0)** mit Standard-Anwendungsrate **R(0)** (Standard-Referenzbehandlung)

Versuchsglied 2: Behandlung 1 Tag vor **t(0) = t(-1d)**

Versuchsglied 3: Behandlung 2 Tage vor **t(0) = t(-2d)**

Versuchsglied 4: Behandlung 4 Tage vor **t(0) = t(-4d)**

Versuchsglied 5: Behandlung 8 Tage vor **t(0) = t(-8d)**

(ggf. weitere Versuchsglieder: n Tage vor **t(0) = t(-nd))**

Man beginnt im zeitlichen Verlauf mit dem Versuchsglied mit dem frühesten Behandlungszeitpunkt, z.B. mit dem obigen Versuchsglied 5 (8 Tage vor **t(0)** und dem 3 Stunden später folgenden **Impfzeitpunkt).** Parallel dazu hält man die Pflanzen der unbehandelten Kontrolle und die der übrigen, später zu behandelnden Versuchsglieder unter gleichen Wachstumsbedingungen für die spätere Impfung und ggf. Behandlungen bereit. Die Standard-Referenzbehandlung erfolgt als zeitlich letzte Behandlung im Versuchsverlauf 3 Stunden vor der Impfung aller Versuchsglieder.

Parallel hierzu kann mit einem weiteren Satz von Versuchsgliedern demonstriert werden, dass die Vorverlegung des Anwendungszeitpunktes eine Reduzierung der Applikationsrate bzw. Aufwandmenge unter gleichzeitiger Beibehaltung bzw. Steigerung des Wirkungsgrades ermöglicht. Hierzu wird das Schema der obigen Versuchsanordnung ab Versuchsglied 2 mit reduzierten Applikationsraten wiederholt, z.B. mit den Applikationsraten 0.8 **R(0),** 0.5 **R(0)** und 0.3 **R(0).**

Hieraus resultiert beispielsweise das folgende zweidimensionale Testschema. In den Zeilen der Spalte "Behandlungszeitpunkt" werden die Applikationszeitpunkte vorverlegt, während in den einzelnen Zeilen die Applikationsraten von links nach rechts reduziert werden. Die Impfung erfolgt für alle Versuchsglieder konstant zum gleichen Impfzeitpunkt (definiert nach Datum und Uhrzeit).

| Behandlungszeitpunkt | Applikationsrate | Applikationsrate | Applikationsrate | Applikationsrate |
|---|---|---|---|---|
| (Unbehandelte Kontrolle) | 0 | 0 | 0 | 0 |
| **t(0)** (Standard-Referenzbehandl.) | **R(0)** | **R(0)** | **R(0)** | **R(0)** |
| **t(-1d)** | **R(0)** | **0.8 R(0)** | **0.5 R(0)** | **0.3 R(0)** |
| **t(-2d)** | **R(0)** | **0.8 R(0)** | **0.5 R(0)** | **0.3 R(0)** |
| **t(-4d)** | **R(0)** | **0.8 R(0)** | **0.5 R(0)** | **0.3 R(0)** |
| **t(-8d)** | **R(0)** | **0.8 R(0)** | **0.5 R(0)** | **0.3 R(0)** |
| . | . | . | . | . |
| . | . | . | . | . |
| **t(-nd)** | **R(0)** | **0.8 R(0)** | **0.5 R(0)** | **0.3 R(0)** |

Nach Durchführung des Versuchs werden die erhaltenen Wirkungsgrade **WG** in das Raster des obigen Testschemas eingetragen. Der Vergleich der von den einzelnen Versuchsgliedern erhaltenen Wirkungsgrade zeigt einerseits in allen Zeilen abnehmende Wirkungsgrade bei fallender Applikationsrate (d.h. von links nach rechts). Andererseits zeigen sich in den einzelnen Spalten bei zunehmender Vorverlegung des Behandlungszeitpunktes(d.h. von oben nach unten) bis zu einem jeweiligen Optimum ansteigende Wirkungsgrade.

Der Versuch zeigt weiterhin, dass auch bei reduzierten Applikationsraten - *also bei eingesparter Aufwandmenge* - Wirkungsgrade erzielt werden können, die den mit der Standard-Referenzbehandlung erzielten Wirkungsgrad zumindest erreichen oder sogar übertreffen.

Für eine erste Orientierung oder zur Einsparung von Versuchsgliedern mag deren Anzahl aus praktischen bzw. pragmatischen Gründen erheblich reduziert werden, sofern dadurch die Aussagekraft des Gesamtversuchs nicht grundsätzlich beeinträchtigt wird..

Das Prinzip dieses Testschemas wird auch den folgenden Anwendungsbeispielen zugrunde gelegt und den Testbedingungen entsprechend angepasst. Es lässt sich nach entsprechender Anpassung auch auf Versuchsanordnungen übertragen, die näher an Praxisbedingungen liegen, z.B. auf Kleinparzellenversuche oder ausgedehnte Freilandtests.

Hierbei ist zu berücksichtigen, dass unter Freilandbedingungen bei zeitlich schwankendem Infektionsdruck über längere Zeiträume sich eine Vorverlegung des Behandlungszeitpunkten im Hinblick auf die frühen Infektionen auch längerfristig besonders vorteilhaft auswirken wird - vorteilhafter als in den hier angegebenen Modellversuchen mit pro Versuch jeweils einem einzigen, definierten Impfzeitpunkt.


**Beispiel B**


**Venturia-Test (Äpfel)**

Junge Pflanzen werden mit einer Zubereitung des zu testenden episystemischen Strobilurins mit der jeweils angegebenen Anwendungsrate des jeweiligen Wirkstoffs besprüht.
Der Zeitpunkt dieser Behandlung ist der **Standard-Anwendungszeitpunkt t(0).** Anschließend lässt man die Sprühbeschichtung 3 Stunden lang antrocknen. Unmittelbar danach werden die Pflanzen mit einer wässrigen Konidiensuspension von Apfelschorf (*Venturia inaequalis*) geimpft. Dies ist der **Impfzeitpunkt.**
Anschließend bleiben die Pflanzen 1 Tag lang in einem Inkubationsschrank bei ca. 20 °C und einer relativen Luftfeuchtigkeit von 100%. Sodann werden sie in einem Gewächshaus bei ca. 21 °C und einer relativen Luftfeuchtigkeit von ca.

90% platziert. Der Test wird 10 Tage nach der Impfung ausgewertet.

Die zeitliche Abfolge nach der Impfung wird bei allen Tests beibehalten. Zeitlich variiert, d.h. vorverlegt wird bei den einzelnen, so erhaltenen Versuchsgliedern nur der Behandlungszeitpunkt in Relation zum Impfzeitpunkt.

**Testschema und Vorgehensweise** sowie die Auswertung der Versuchsglieder werden analog zu den beim **Beispiel A** erläuterten Procedere durchgeführt.

Auch hier zeigt der Vergleich der von den einzelnen Versuchsgliedern erhaltenen Wirkungsgrade, dass die zunehmende Vorverlegung des Behandlungszeitpunktes in allen Spalten zu steigenden Wirkungsgraden führt. Er zeigt weiterhin, dass auch bei reduzierten Applikationsraten Wirkungsgrade erzielt werden können, die den mit der Standard-Referenzbehandlung erzielten Wirkungsgrad zumindest erreichen oder sogar übertreffen.

## Beispiel C

### Pyrenophora-Test (Gerste)

Junge Pflanzen werden mit einer Zubereitung des zu testenden episystemischen Strobilurins mit der jeweils angegebenen Anwendungsrate des jeweiligen Wirkstoffs besprüht.
Der Zeitpunkt dieser Behandlung ist der **Standard-Anwendungszeitpunkt t(0).** Anschließend lässt man die Sprühbeschichtung 3 Stunden lang antrocknen. Unmittelbar danach werden die Pflanzen mit einer wässrigen Sporensuspension von *Pyrenophora teres* geimpft. Dies ist der **Impfzeitpunkt.**
Anschließend bleiben die Pflanzen 2 Tage lang in einem Inkubationsschrank bei ca. 22 °C und einer relativen Luftfeuchtigkeit von 100%. Sodann werden sie in einem Gewächshaus bei ca. 20 °C und einer relativen Luftfeuchtigkeit von ca. 80% platziert. Der Test wird 8 Tage nach der Impfung ausgewertet.
Die zeitliche Abfolge nach der Impfung wird bei allen Tests beibehalten. Zeitlich variiert, d.h. vorverlegt wird bei den einzelnen, so erhaltenen Versuchsgliedern nur der Behandlungszeitpunkt in Relation zum Impfzeitpunkt.

**Testschema und Vorgehensweise** sowie die Auswertung der Versuchsglieder werden analog zu den beim **Beispiel A** erläuterten Procedere durchgeführt.

Auch hier zeigt der Vergleich der von den einzelnen Versuchsgliedern erhaltenen Wirkungsgrade, dass die zunehmende Vorverlegung des Behandlungszeitpunktes in allen Spalten zu steigenden Wirkungsgraden führt. Er zeigt weiterhin, dass auch bei reduzierten Applikationsraten Wirkungsgrade erzielt werden können, die den mit der Standard-Referenzbehandlung erzielten Wirkungsgrad zumindest erreichen oder sogar übertreffen.

## Beispiel D

### Alternaria-Test (Tomate)

Junge Pflanzen werden mit einer Zubereitung des zu testenden episystemischen Strobilurins mit der jeweils angegebenen Anwendungsrate des jeweiligen Wirkstoffs besprüht.
Der Zeitpunkt dieser Behandlung ist der **Standard-Anwendungszeitpunkt t(0).** Anschließend lässt man die Sprühbeschichtung 3 Stunden lang antrocknen. Unmittelbar danach werden die Pflanzen mit einer wässrigen Sporensuspension von *Alternaria solani* geimpft. Dies ist der **Impfzeitpunkt.**
Anschließend bleiben die Pflanzen 1 Tag lang in einem Inkubationsschrank bei 20 °C und einer relativen Luftfeuchtigkeit von 96% platziert. Der Test wird 7 Tage nach der Impfung ausgewertet.
Die zeitliche Abfolge nach der Impfung wird bei allen Tests beibehalten. Zeitlich variiert, d.h. vorverlegt wird bei den einzelnen, so erhaltenen Versuchsgliedern nur der Behandlungszeitpunkt in Relation zum Impfzeitpunkt.

**Testschema und Vorgehensweise** sowie die Auswertung der Versuchsglieder werden analog zu den beim **Beispiel A** erläuterten Procedere durchgeführt.

Auch hier zeigt der Vergleich der von den einzelnen Versuchsgliedern erhaltenen Wirkungsgrade, dass die zunehmende Vorverlegung des Behandlungszeitpunktes in allen Spalten zu steigenden Wirkungsgraden führt. Er zeigt weiterhin, dass auch bei reduzierten Applikationsraten Wirkungsgrade erzielt werden können, die den mit der Standard-Referenzbehandlung erzielten Wirkungsgrad zumindest erreichen oder sogar übertreffen.

## Beispiel E

### Botrytis-Test (Paprika)

Junge Pflanzen werden mit einer Zubereitung des zu testenden episystemischen Strobilurins mit der jeweils angegebenen Anwendungsrate des jeweiligen Wirkstoffs besprüht.
Der Zeitpunkt dieser Behandlung ist der **Standard-Anwendungszeitpunkt t(0).** Anschließend lässt man die Sprühbeschichtung 3 Stunden lang antrocknen. Unmittelbar danach werden die Pflanzen mit einer wässrigen Sporensuspension von *Botrytis cinerea,* die 2% Biomalz enthält, geimpft. Dies ist der **Impfzeitpunkt.**

Anschließend bleiben die Pflanzen 1 Tag lang in einem Inkubationsschrank bei ca. 22 °C und einer relativen Luftfeuchtigkeit von 100%. Sodann werden sie in einer Klimakammer bei Dunkelheit, ca. 20 ° bis 24 °C und hoher Luftfeuchtigkeit platziert. Der Test wird 5 Tage nach der Impfung ausgewertet.

Die zeitliche Abfolge nach der Impfung wird bei allen Tests beibehalten. Zeitlich variiert, d.h. vorverlegt wird bei den einzelnen, so erhaltenen Versuchsgliedern nur der Behandlungszeitpunkt in Relation zum Impfzeitpunkt.

**Testschema und Vorgehensweise** sowie die Auswertung der Versuchsglieder werden analog zu den beim **Beispiel A** erläuterten Procedere durchgeführt.

Auch hier zeigt der Vergleich der von den einzelnen Versuchsgliedern erhaltenen Wirkungsgrade, dass die zunehmende Vorverlegung des Behandlungszeitpunktes in allen Spalten zu steigenden Wirkungsgraden führt. Er zeigt weiterhin, dass auch bei reduzierten Applikationsraten Wirkungsgrade erzielt werden können, die den mit der Standard-Referenzbehandlung erzielten Wirkungsgrad zumindest erreichen oder sogar übertreffen.

**Beispiel F**

**Weizenbraunrost-Test**

Junge Pflanzen werden mit einer Zubereitung des zu testenden episystemischen Strobilurins mit der jeweils angegebenen Anwendungsrate des jeweiligen Wirkstoffs besprüht.

Der Zeitpunkt dieser Behandlung ist der **Standard-Anwendungszeitpunkt t(0).** Anschließend lässt man die Sprühbeschichtung 3 Stunden lang antrocknen. Unmittelbar danach werden die Pflanzen mit einer wässrigen Sporensuspension von *Puccinia recondita* geimpft. Dies ist der **Impfzeitpunkt.**

Anschließend bleiben die Pflanzen 24 Stunden lang in eine Kammer bei ca. 22 °C und einer relativen Luftfeuchtigkeit von 90 - 95%. Sodann werden sie ins Gewächshaus zurückgestellt bei ca. 20 bis 22 °C und einer relativen Luftfeuchtigkeit von ca. 65 bis 70% platziert. Der Test wird 7 Tage nach der Impfung ausgewertet.

Die zeitliche Abfolge nach der Impfung wird bei allen Tests beibehalten. Zeitlich variiert, d.h. vorverlegt wird bei den einzelnen Versuchsgliedern nur der Behandlungszeitpunkt in Relation zum Impfzeitpunkt.

**Testschema und Vorgehensweise** sowie die Auswertung der Versuchsglieder werden analog zu den beim **Beispiel A** erläuterten Procedere durchgeführt.

Auch hier zeigt der Vergleich der von den einzelnen Versuchsgliedern erhaltenen Wirkungsgrade, dass die zunehmende Vorverlegung des Behandlungszeitpunktes in allen Spalten zu steigenden Wirkungsgraden führt. Er zeigt weiterhin, dass auch bei reduzierten Applikationsraten Wirkungsgrade erzielt werden können, die den mit der Standard-Referenzbehandlung erzielten Wirkungsgrad zumindest erreichen oder sogar übertreffen.

**Literaturhinweise**

[1] K. Beautement, J.M. Clough, P.J. de Fraine, C.R.A. Godfrey, Pestic. Sci. 31, 499-519 (1991)

[2] J.M. Clough, C.R.A. Godfrey,in D.H. Hudson, J.Miyamoto, "Fungicidal Activity, Chemical and Biological Approaches to Plant Protection", John Wiley & Sons, Inc., New York, 109-148 (1998).

[3] D.W. Bartlett, J.M.Clough, J.R. Godwin, A.A. Hall,M. Hamer, B. Parr-Dobrzanski, Pest Managm. Sci. 58, 649-662 (2002).

[4] H. Sauter, W. Steglich, T. Anke, "Strobilurine: Evolution einer neuen Wirkstoffklasse", Angew. Chem. 111, 1416 - 1438 (1999). Angew. Chem. International Edition 38, 1328 - 1349 (1999).

[5] H. Sauter, "Strobilurins and Other Complex III Inhibitors", in: W. Krämer, U. Schirmer (eds.), "Modern Crop Protection Compounds", Chapter 3.3.2., 457 - 495, VCH-Wiley, Weinheim 2007.
Aktualisierte, dritte . Auflage: Markus Gewehr und Hubert Sauter, in Peter Jeschke, Matthias Witschel, Wolfgang Krämer, Ulrich Schirmer (eds.), Modern Crop Protection Compounds, 3rd Edition, Vol. II (Fungicides), Chapter 15.2, S. 634 - 681, VCH-Wiley, Weinheim 2019.

[6] Joachim Rheinheimer, Violeta Terteryan, Stefan Redlich, Doris Kremzow, Claudia Rosenbaum, Sebastian Georgios Rohrer, Wassilios Grammenos, Christian Pilger, Franz Röhl, Markus Gewehr, Gerd Stammler, Jurith Montag,

**EP 4 088 575 A1**

Hubert Sauter,,, Use of strobilurin type compounds, WO 2013/092224 A1, Priorität 21.12.2011

[7] a) H. Sauter, E. Ammermann, R. Benoit, S. Brand, R. E. Gold, W. Grammenos, H. Koehle, G. Lorenz, B. Mueller, F. Roehl, U. Schirmer, J. B. Speakman, B. Wenderoth, H. Wingert, "Mitochondrial Respiration as a Target for Antifungals: Lessons from Research on Strobilurins", in: G. K. Dixon, L. G. Copping, D. W. Hollomon (eds.), "Antifungal Agents - Discovery and Mode of Action", BIOS Scientific Publishers, 173 - 191, Oxford 1995. b) R.E. Gold, E. Ammermann, H. Köhle, G.M.E. Leinhos, G. Lorenz, J.B. Speakman, M. Stark-Urnau, H. Sauter, in H.Lyr, P.E. Russel, H.D. Sisler "Modern Fungicides and Antifungal Compounds", Intercept, Andover1996 S. 79 - 92.

[8] BBCH Monografie "Entwicklungsstadien mono- und dikotyler Pflanzen", Biologische Bundesanstalt für Land- und Forstwirtschaft, bearbeitet von Uwe Meier, 2.Aufl. 2001.

**Patentansprüche**

1. Verfahren zur prä-protektiven Blattbehandlung von Pflanzen mit Fungiziden, die gleichzeitig episystemische Transport- und Verteilungseigenschaften und sehr hohe Hemmung der pilzlichen Sporenkeimung aufweisen, **dadurch gekennzeichnet, dass** man den Behandlungszeitpunkt vor den Standard-Anwendungszeitpunkt (t(0)), an dem in der konkreten Situation aufgrund von Prognosen oder Erfahrungswissen Sporenanflug zu erwarten ist, vorverlegt und gleichzeitig die Aufwandmenge demgegenüber vermindert.

2. Verfahren nach Anspruch 1, bei dem die Fungizide einen Dampfdruck zwischen 0.5 x $10^{-7}$ und 5 x $10^{-6}$ Pascal (bei 20° C) aufweisen.

3. Verfahren nach Anspruch 1 und 2, bei dem die Fungizide einen Dampfdruck zwischen $10^{-7}$ und $10^{-6}$ Pascal (bei 20° C) aufweisen.

4. Verfahren nach mindestens einem der Ansprüche 1 bis 3, bei die Fungizide einen Verteilungskoeffizient Octanol/Wasser (log Pow) größer ca. 2.0 aufweisen.

5. Verfahren nach mindestens einem der Ansprüche 1 bis 4, bei die Fungizide einen Verteilungskoeffizient Octanol/Wasser (log Pow) größer ca. 3.0 aufweisen.

6. Verfahren nach mindestens einem der Ansprüche 1 bis 5, bei dem als Fungizid mindestens ein episystemisches Fungizid aus der Stoffklasse der Strobilurine ausgewählt wird.

7. Verfahren nach mindestens einem der Ansprüche 1 bis 6, bei dem mindestens ein episystemisches Fungizid aus der Stoffklasse der Strobilurine ausgewählt und in einer Mischung mit einem systemischen oder einem anderen Fungizid verwendet wird.

8. Verfahren nach mindestens einem der Ansprüche 1 bis 7, bei dem als episystemisches Fungizid mindestens ein Strobilurin aus der Gruppe "Triclopyricarb, Flufenoxystrobin, Bifujunzhi, Benzothiostrobin, Trifloxystrobin, Picoxystrobin und Kresoxim-methyl" ausgewählt wird.

9. Verfahren nach Anspruch 8, bei dem als episystemisches Strobilurin Trifloxystrobin, ausgewählt wird.

10. Verfahren zur Ermittlung des optimalen, vorverlegten Zeit-Bereiches für die prä-protektive Behandlung und für die dazu passenden verminderten Aufwandmenge **dadurch gekennzeichnet, dass** man in an sich bekannter Weise empirisch die Aufwandmenge R(0) ermittelt, bei der am Standard-Anwendungszeitpunkt (t(0)) bei den jeweiligen Kulturpflanzen ein Wirkungsgrad WG von 90-98% erzielt wird und anschließend systematisch die nötige Aufwandmenge R bei Behandlung vor Standard-Anwendungszeitpunkt (t(0)) bestimmt, bei der ein Wirkungsgrad WG von mehr als 98% erzielt wird.

Europäisches Patentamt

European Patent Office

Office européen des brevets

## EUROPÄISCHER RECHERCHENBERICHT

Nummer der Anmeldung

EP 21 02 0257

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Sauter Hubert: "Ch. 13.2: Strobilurins and Other Complex III Inhibitors", Modern Crop Protection Compounds, 23. Februar 2007 (2007-02-23), Seiten 457-495, XP055850005, Gefunden im Internet: URL:https://onlinelibrary.wiley.com/doi/10.1002/9783527619580.ch13 [gefunden am 2021-10-11] * Seite 475, Zeile 6 - Zeile 44 * * Tabelle 13.2.2 * * Abbildung 13.2.8 * ----- | 1-10 | INV. A01N37/50 A01N43/40 A01P3/00 |
| X | STUMP WILLIAM L. ET AL: "Strobilurin Fungicide Timing for Rhizoctonia Root and Crown Rot Suppression in Sugarbeet", JOURNAL OF SUGAR BEET RESEARCH, Bd. 41, Nr. 1, 1. Januar 2004 (2004-01-01), Seiten 17-38, XP055849874, Fort Collins, Colorado, USA ISSN: 0899-1502, DOI: 10.5274/jsbr.41.1.17 | 1-6,8,9 | |
| Y | * Seite 26, Zeile 5 - Zeile 11 * * Tabelle 6: Behandlungen 9-11 * ----- | 1-10 | RECHERCHIERTE SACHGEBIETE (IPC) A01N |
| X | VELOUKAS ET AL: "Management of tomato leaf mould caused by Cladosporium fulvum with trifloxystrobin", CROP PROTECTION, ELSEVIER SCIENCE, GB, Bd. 26, Nr. 6, 31. März 2007 (2007-03-31), Seiten 845-851, XP022011265, ISSN: 0261-2194, DOI: 10.1016/J.CROPRO.2006.08.005 | 1-6,8,9 | |
| Y | * Abschnitte 2.1.1.-2.1.4 * * Tabelle 1 * ----- -/-- | 1-10 | |

Der vorliegende Recherchenbericht wurde für alle Patentansprüche erstellt

| Recherchenort | Abschlußdatum der Recherche | Prüfer |
|---|---|---|
| München | 12. Oktober 2021 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

**Nummer der Anmeldung**

EP 21 02 0257

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Masaomi Ogawa ET AL: "Applied Development of a Novel Fungicide Isotianil", "Sumitomu Kagaku", R&D Report, 31. Mai 2011 (2011-05-31), Seiten 1-16, XP055050246, Sumitomo Web Site Gefunden im Internet: URL:http://www.sumitomo-chem.co.jp/english/rd/report/theses/docs/2011-1E_01.pdf [gefunden am 2013-01-18] * Abbildung 2 * | 1,2,4,5 | |
| X | Chang Tae-Hyun ET AL: "Evaluation of fungicides for preventive and curative effects against powdery mildew on oriental melon", Korean Journal of Environmental Agriculture, 1. Januar 2006 (2006-01-01), Seiten 85-92, XP055850290, South Korea Gefunden im Internet: URL:http://koreascience.or.kr/article/JAKO200607341609677.pdf [gefunden am 2021-10-12] | 1-6,8 | |
| Y | * Tabelle 2 * | 1-10 | RECHERCHIERTE SACHGEBIETE (IPC) |
| X | XU CONGYING ET AL: "Activity of a novel strobilurin fungicide benzothiostrobin against Sclerotinia sclerotiorum", PESTICIDE BIOCHEMISTRY AND PHYSIOLOGY, Bd. 115, 1. Oktober 2014 (2014-10-01), Seiten 32-38, XP055850414, US ISSN: 0048-3575, DOI: 10.1016/j.pestbp.2014.08.001 | 1-6,8 | |
| Y | * Abschnitte 2.8 und 3.7 * * Tabelle 2 * | 1-10 | |

Der vorliegende Recherchenbericht wurde für alle Patentansprüche erstellt

| Recherchenort | Abschlußdatum der Recherche | Prüfer |
|---|---|---|
| München | 12. Oktober 2021 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

**In der Beschreibung aufgeführte Patentdokumente**

- WO 2013092224 A1

**In der Beschreibung aufgeführte Nicht-Patentliteratur**

- Leaf Surface Distribution via Vapor Phase: Episystemicity. 2019, 674-675
- **K. BEAUTEMENT ; J.M. CLOUGH ; P.J. DE FRAINE ; C.R.A. GODFREY.** *Pestic. Sci.,* 1991, vol. 31, 499-519
- **J.M. CLOUGH ; C.R.A. GODFREY ; D.H. HUDSON ; J.MIYAMOTO.** Fungicidal Activity, Chemical and Biological Approaches to Plant Protection. John Wiley & Sons, Inc, 1998, 109-148
- **D.W. BARTLETT ; J.M.CLOUGH ; J.R. GODWIN ; A.A. HALL ; M. HAMER ; B. PARR-DOBRZANSKI.** *Pest Managm. Sci.,* 2002, vol. 58, 649-662
- **H. SAUTER ; W. STEGLICH ; T. ANKE.** Strobilurine: Evolution einer neuen Wirkstoffklasse. *Angew. Chem.,* 1999, vol. 111, 1416-1438
- *Angew. Chem. International Edition,* 1999, vol. 38, 1328-1349
- Strobilurins and Other Complex III Inhibitors. **H. SAUTER.** Modern Crop Protection Compounds. VCH-Wiley, 2007, 457-495
- **MARKUS GEWEHR ; HUBERT SAUTER.** Modern Crop Protection Compounds. VCH-Wiley, 2019, 634-681
- Mitochondrial Respiration as a Target for Antifungals: Lessons from Research on Strobilurins. **H. SAUTER ; E. AMMERMANN ; R. BENOIT ; S. BRAND ; R. E. GOLD ; W. GRAMMENOS ; H. KOEHLE ; G. LORENZ ; B. MUELLER ; F. ROEHL.** Antifungal Agents - Discovery and Mode of Action. BIOS Scientific Publishers, 1995, 173-191
- **R.E. GOLD ; E. AMMERMANN ; H. KÖHLE ; G.M.E. LEINHOS ; G. LORENZ ; J.B. SPEAKMAN ; M. STARK-URNAU ; H. SAUTER ; H.LYR ; P.E. RUSSEL.** Modern Fungicides and Antifungal Compounds. *Intercept, Andover,* 1996, 79-92
- Biologische Bundesanstalt für Land- und Forstwirtschaft. Entwicklungsstadien mono- und dikotyler Pflanzen. 2001